# FASCICULE DE BREVET EUROPEEN

(11) **EP 3 445 621 B1**
(45) Date de publication et mention de la délivrance du brevet: **15.04.2020**
(21) Numéro de dépôt: 17711685.2
(22) Date de dépôt: 23.03.2017
(51) Int. Cl.: B60S 1/56, B60S 1/08, G02B 27/00

(54) **DISPOSITIF DE NETTOYAGE D'UN CAPTEUR D'UN SYSTEME DE DETECTION OPTIQUE DE VEHICULE AUTOMOBILE**
VORRICHTUNG ZUR REINIGUNG EINES SENSORS EINES OPTISCHEN DETEKTIONSSYSTEMS FÜR EIN KRAFTFAHRZEUG
DEVICE FOR CLEANING A SENSOR OF AN OPTICAL DETECTION SYSTEM FOR A MOTOR VEHICLE

(30) Priorité: 21.04.2016 FR 1653517
(43) Date de publication de la demande: 27.02.2019
(73) Titulaire: Valeo Systèmes d'Essuyage, 78322 Le Mesnil Saint Denis (FR)
(72) Inventeur: GIRAUD, Frédéric, 78322 La Verriere (FR)
(74) Mandataire: Valeo Systèmes d'Essuyage
(86) Numéro de dépôt international: PCT/EP2017/056911
(87) Numéro de publication internationale: WO 2017/182224

(56) Documents cités:
- EP-A1- 2 873 572
- WO-A1-2014/086760
- US-A1- 2014 270 379
- US-A1- 2016 101 735

## Description

Le domaine de la présente invention est celui des systèmes de détection optique, notamment utilisés pour l'aide à la conduite des véhicules automobiles, qui mettent en œuvre des capteurs optiques. Dans ce domaine, l'invention concerne plus particulièrement les dispositifs de nettoyage des capteurs de ces dispositifs optiques.

Le document US 2014/0270379 A1 est considéré comme l'état de la technique le plus proche de l'objet de la revendication 1.

On appelle système de détection optique tout système comportant des capteurs optiques, tels que des caméras, des capteurs laser (communément appelés LIDAR) ou autres capteurs basés sur l'émission et/ou la détection de la lumière dans le spectre visible ou invisible pour l'Homme, en particulier l'infrarouge.

De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le système de détection optique doivent être de la meilleure qualité possible, et il est donc indispensable de disposer d'optiques propres pour réaliser ces acquisitions de données. Pour ce faire, il est connu de placer, au voisinage de ces capteurs optiques, un dispositif de nettoyage apte à projeter un fluide nettoyant juste avant que soit réalisée la détection.

De tels capteurs étant, le plus souvent, dissimulés à la vue directe du conducteur du véhicule, leur nettoyage est commandé de manière automatique, par exemple avec une périodicité prédéfinie. Le problème qui se pose alors est celui de l'instant auquel cette opération de nettoyage sera effectuée, et il peut se produire qu'elle ait lieu à un moment défavorable au regard d'une situation de conduite particulière. On comprend aisément, par exemple, qu'il soit inopportun qu'une opération de nettoyage de la lentille d'une caméra d'aide au stationnement soit commandée au moment où le conducteur est en cours de manœuvre de stationnement ou engage une marche arrière. Si, dans le cas d'une aide au stationnement, l'inconvénient peut n'être qu'une simple gêne, il est des cas dans lesquels, selon le type de capteur considéré, le déclenchement impromptu d'une opération de nettoyage de celui-ci peut conduire à une situation de conduite potentiellement accidentogène. Par ailleurs, et notamment dans le cas d'un déclenchement automatique du nettoyage alors que le véhicule circule à grande vitesse, il existe un risque que des gouttes du liquide nettoyant soit projeté dans le champ de vision du conducteur et que cela représente une distraction dangereuse pour la conduite du véhicule.

Le but de la présente invention s'inscrit dans ce contexte et elle propose une solution dans laquelle le nettoyage d'un capteur d'un tel ensemble optique de détection ne puisse être démarré de manière impromptue ou d'une manière qui puisse conduire à une situation de conduite potentiellement accidentogène.

Dans ce but, l'invention a pour objet un dispositif de nettoyage d'un capteur d'un système de détection optique pour véhicule automobile, qui comprend un ensemble de distribution de fluide sur ledit capteur piloté par des instructions de fonctionnement émises par un module de commande. Selon l'invention, le module de commande est configuré pour générer un message d'information relatif au besoin d'une opération de nettoyage du capteur et pour recevoir une instruction de commande d'un occupant du véhicule autorisant cette opération de nettoyage.

Ainsi, l'invention propose que le démarrage d'une opération de nettoyage d'un tel capteur soit soumis à une autorisation préalable de la part du conducteur du véhicule.

Selon différentes caractéristiques de l'invention, prises seules ou en combinaison, on pourra prévoir que :
- le dispositif comporte des moyens de détection de la présence de corps étrangers sur le capteur, qui sont configurés pour émettre vers le module de commande une donnée relative au besoin d'une opération de nettoyage du capteur optique ;
- le module de commande est configuré pour communiquer avec des moyens de signalisation, susceptibles de générer ledit message d'information dans l'habitacle du véhicule ;
- le dispositif comporte des moyens de reconnaissance de l'instruction de commande d'un occupant du véhicule, configurés pour communiquer avec le module de commande et lui transmettre une donnée relative à l'autorisation de l'opération de nettoyage ;
- les moyens de reconnaissance sont rendus actifs par le module de commande simultanément à l'émission dudit message d'information ;
- les moyens de reconnaissance comportent un bouton apte à être actionné par un occupant du véhicule ;
- les moyens de reconnaissance comportent des moyens de reconnaissance gestuelle et/ou vocale ;
- l'ensemble de distribution de fluide est configuré pour se déplacer entre une position de repos et une position de travail dans laquelle le fluide de nettoyage est distribué sur une surface du capteur ;
- le dispositif comporte des moyens de surveillance d'un ou plusieurs paramètres de conduite du véhicule configurés pour générer une donnée représentative de la situation de conduite de ce véhicule et pour communiquer cette donnée au module de commande ;
- le module de commande est configuré pour générer, suite à une instruction de commande de l'occupant du véhicule, plusieurs cycles de nettoyage par l'ensemble de distribution de fluide, successivement ou à des intervalles de temps prédéfinis ;
- le module de commande est configuré pour générer, suite à une instruction de commande de l'occupant du véhicule, un ou plusieurs cycles de nettoyage jusqu'à l'arrêt complet du véhicule.

Dans la pratique, le dispositif de nettoyage d'un capteur d'un système de détection optique est souvent couplé à un dispositif de nettoyage d'au moins une surface vitrée avant et/ou arrière du véhicule. Selon l'invention, dans ce cas, le module de commande peut être configuré pour piloter en outre le fonctionnement d'un ensemble de nettoyage d'au moins une surface vitrée avant et/ou arrière du véhicule. On pourra prévoir un réservoir de stockage de fluide commun avec l'ensemble de nettoyage d'au moins une surface vitrée et on pourra prévoir des moyens de surveillance d'un niveau de fluide dans ce réservoir, configurés pour communiquer avec le module de commande. Par ailleurs, on pourra prévoir que le module de commande comporte des moyens pour commander sélectivement, en fonction d'une première valeur prédéfinie de niveau de fluide dans le réservoir de stockage, le dispositif de nettoyage du capteur optique et/ou l'ensemble de nettoyage d'au moins une surface vitrée.

En d'autres termes, dans ce cas, le nettoyage du capteur du système de détection optique peut être commandé seul, prioritairement par rapport au nettoyage de la ou des surfaces vitrées avant et/ou arrière du véhicule. Dans ce cas, selon une caractéristique avantageuse de l'invention, le module de commande est configuré pour permettre l'affichage, dans l'habitacle, d'un message représentatif du niveau de fluide dans le réservoir de stockage et de l'opération de nettoyage effectuée.

L'invention concerne également un véhicule automobile comportant un système de détection optique et un dispositif de nettoyage associé susceptible de procéder au nettoyage du capteur optique de ce système de détection. On pourra notamment prévoir que le module de commande est disposé n'importe où dans le véhicule tandis que les moyens de signalisation et les moyens de reconnaissance tels qu'ils ont été précédemment présentés sont disposés dans l'habitacle du véhicule.

L'invention concerne également un procédé de nettoyage d'un capteur d'un système de détection optique pour véhicule automobile, dans lequel un ensemble de distribution de fluide est déplacé entre une position de repos et une position de travail dans laquelle le fluide peut être distribué sur une surface du capteur, au cours duquel on prévoit une étape de détection, sur cette surface du capteur, d'éventuelles salissures, une étape de génération d'un signal représentatif de la présence d'éventuelles salissures à la surface du capteur optique, une étape d'affichage, dans l'habitacle du véhicule, d'un message représentatif de la présence d'éventuelles salissures à la surface du capteur optique, une étape de reconnaissance d'une commande, par un utilisateur situé dans l'habitacle du véhicule, sur la base du message affiché dans l'habitacle, autorisant une opération de nettoyage du capteur, et une étape de mise en marche de l'ensemble de distribution de fluide.

Selon des caractéristiques particulières de ce procédé selon l'invention, on pourra prévoir :
- une étape de génération d'une donnée représentative de la situation de conduite du véhicule, ladite étape de mise en marche de l'ensemble de distribution de fluide étant conditionnée par la valeur de cette donnée, et/ou
- une étape de surveillance du niveau d'un réservoir commun de stockage d'un fluide pour le nettoyage d'une surface vitrée avant et/ou arrière du véhicule et pour le nettoyage du capteur, ainsi qu'une étape de génération d'une donnée représentative de ce niveau de fluide dans ce réservoir de stockage, ladite étape de mise en marche de l'ensemble de distribution de fluide étant conditionnée par la valeur de cette donnée.

D'autres caractéristiques, détails et avantages de l'invention ressortiront plus clairement à la lecture de la description donnée ci-après à titre indicatif en relation avec les figures annexées, dans lesquelles :
- la figure 1 est une vue générale schématique d'un dispositif de nettoyage selon l'invention ;
- la figure 2 est une vue schématique, sous la forme d'un organigramme, d'un procédé de nettoyage selon l'invention ; et
- la figure 3 est une vue schématique, sous la forme d'un organigramme, d'une variante de procédé de nettoyage selon l'invention.

L'invention sera décrite dans ce qui suit dans son application, non exclusive, à un système de détection optique comprenant un capteur optique 1 équipé d'une lentille 2. L'invention sera donc ici décrite à travers un dispositif de nettoyage de la lentille 2 de ce capteur optique.

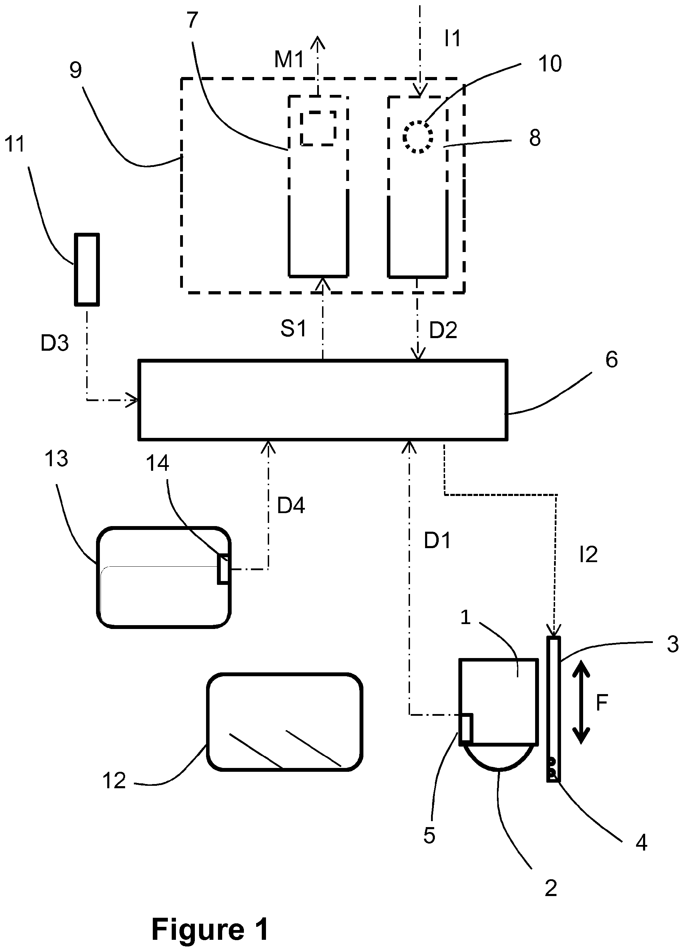

Un tel dispositif de nettoyage comprend un ensemble de distribution de fluide 3, ici mobile entre une position de repos et une position de travail, selon une direction schématiquement représentée par la double flèche F visible sur la figure 1. Cet ensemble de distribution de fluide 3 comporte, en particulier, un ensemble de buses de distribution 4 par lesquelles un ou plusieurs fluides de nettoyage et/ou de séchage peuvent être projetés. Dans la position de travail du dispositif de nettoyage selon l'invention, plus particulièrement illustrée par la figure 1, les buses de distribution 4 sont placées de telle manière qu'elles projettent ce ou ces fluides sur la surface extérieure de la lentille 2, permettant ainsi de retirer de celle-ci d'éventuelles traces et/ou salissures qui pourraient perturber la détection par le capteur optique 1, et par exemple la prise de vues par une caméra. Le fluide de nettoyage est projeté lorsque l'ensemble de distribution de fluide 3 est dans sa position de travail, et la projection du fluide de nettoyage peut être suivie d'une projection d'un fluide de séchage, afin d'éliminer toute trace ou résidu que le fluide de nettoyage pourrait laisser. Dans la position de repos, ici non représentée, d'un tel dispositif de nettoyage, l'ensemble de distribution de fluide 3 est placé en retrait de la surface de la lentille 2, et aucun fluide n'est projeté par les buses de distribution 4. Ainsi, dans le cas illustré, on peut considérer que l'opération de nettoyage de la lentille 2 consiste en la succession d'une première étape de déplacement de l'ensemble distribution de fluide 3, entre position de repos et position de travail, puis une deuxième étape de projection de fluide nettoyant.

Le capteur optique 1 est équipé de moyens de détection 5 aptes à générer un signal représentatif de la présence, à la surface de la lentille 2, d'éventuels corps étrangers tels que poussières, débris ou autres types de salissures. Ces moyens de détection sont configurés pour communiquer avec un module de commande 6, notamment de manière à pouvoir transmettre à ce module de commande une première donnée D1 représentative de la présence d'éventuels corps étrangers à la surface de la lentille 2.

Le module de commande 6 est configuré pour d'une part recevoir une première donnée D1 en provenance des moyens de détection associés au capteur optique à nettoyer, tel que cela vient d'être précisé, et d'autre part émettre un premier signal S1 en direction de moyens de signalisation 7 susceptibles de délivrer, dans l'habitacle du véhicule, un message d'information M1 aux occupants du véhicule qui soit représentatif de ce premier signal.

Par ailleurs, le module de commande 6 est configuré pour recevoir une réponse à ce premier signal S1 sous la forme d'une deuxième donnée D2 en provenance de moyens de reconnaissance 8 d'une instruction de commande I1 du conducteur, de manière à commander une opération de nettoyage du capteur optique, c'est-à-dire dans le cas présent un déplacement de l'ensemble de distribution de fluide entre position de repos et position de travail et une projection de liquide de nettoyage sur la lentille du capteur.

On comprend que le module de commande 6 peut s'étendre à n'importe quel endroit du véhicule et que les moyens de signalisation 7 et les moyens de reconnaissance 8 sont disposés à l'intérieur de l'habitacle 9, schématiquement représenté en traits discontinus sur la figure 1.

Les moyens de signalisation 7 sont configurés pour délivrer, dans l'habitacle 9, un message d'information M1 représentatif de la présence d'éventuels corps étrangers sur la surface de la lentille 2.

Ces moyens de signalisation 7 peuvent comporter un écran, et notamment un écran utilisé par ailleurs par un ensemble de gestion et de contrôle du véhicule du type ordinateur de bord, sur lequel le message d'information M1 pourra consister en des mots signalant le besoin de nettoyer le capteur optique. On pourra également prévoir l'allumage d'un voyant lumineux sur le tableau de bord du véhicule ou, encore, la délivrance d'un message audio dans l'habitacle.

Les moyens de reconnaissance 8 peuvent comporter une caméra de détection pour la reconnaissance gestuelle d'un mouvement de l'utilisateur ou ils peuvent prendre la forme de moyens de reconnaissance vocale d'une instruction orale de l'utilisateur. Ils peuvent également consister en un bouton 10 que le conducteur est invité à manœuvrer lorsqu'il souhaite agir sur le dispositif de nettoyage du capteur optique, notamment après la visualisation du message d'information M1.

Selon des caractéristiques de l'invention propres au fonctionnement des moyens de reconnaissance, et ce afin que des instructions parasites ne viennent dégrader la performance du système, on prévoit que les moyens de reconnaissance 8 pour déclencher une commande, depuis l'habitacle, de la réalisation d'une opération de nettoyage du système optique de détection, ne sont actifs que lorsque le message d'information M1 représentatif de la présence d'éventuels corps étrangers sur la surface du capteur optique prend une valeur prédéfinie. Ceci est notamment utile lorsque les moyens de reconnaissance consistent en des moyens de reconnaissance vocale et/ou gestuelle, afin d'éviter qu'ils soient constamment allumés.

Et on pourra envisager un laps de temps après la délivrance du message d'information M1 dans lequel l'instruction de commande doit être formulée par le conducteur ou tout autre occupant du véhicule pour que celle-ci soit prise en compte par les moyens de reconnaissance, et par le module de commande.

Le module de commande est apte à générer une deuxième instruction de commande I2 à destination de l'ensemble de distribution de fluide 3 afin que l'actionneur associé génère le déplacement des buses de distribution de fluide et la projection de liquide vers le capteur optique.

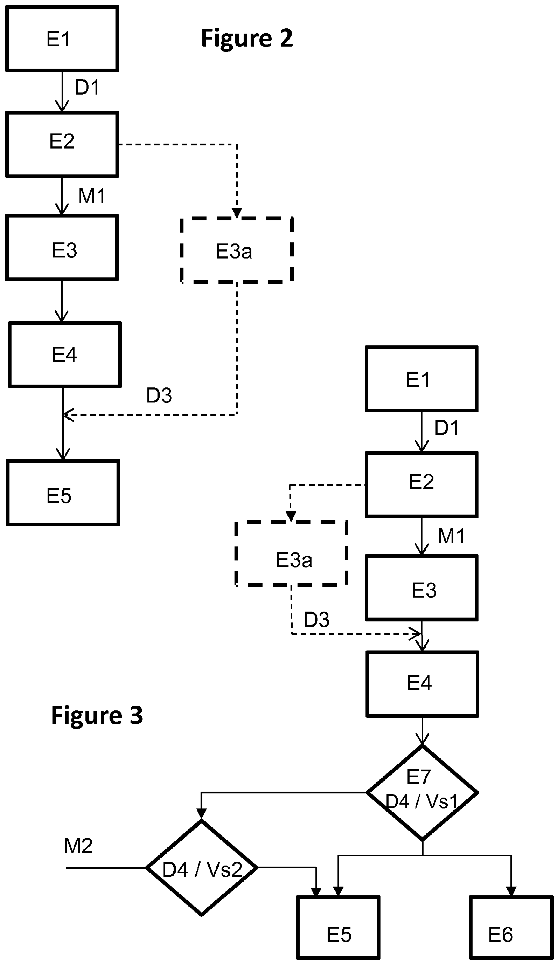

En d'autres termes, et en se référant notamment à l'organigramme de la figure 2, le procédé de nettoyage de capteur optique selon l'invention débute lorsque des corps étrangers sont détectés par les moyens de détection 5 sur la surface de la lentille 2 (étape E1), une donnée D1 représentative de cette présence étant alors transmise au module de commande 6 qui analyse cette première donnée pour générer un message d'information à faire parvenir aux utilisateurs dans l'habitacle (étape E2). Le module de commande communique avec les moyens de signalisation 7 logés dans l'habitacle pour la diffusion de ce message d'information M1 représentatif de la donnée D1 (étape E3), le type du message d'information pouvant dépendre du caractère d'urgence de l'information à communiquer et/ou des préférences paramétrées par l'utilisateur. A titre d'exemple, des messages urgents, relatifs par exemple à l'encrassement total du capteur, pourront être relayés à la fois par un support visuel et par un message audio, tandis que des messages de prévention amont, relatifs par exemple à un début d'encrassement du capteur optique, pourront être délivrés sous forme uniquement de messages écrits si le conducteur ne souhaite pas recevoir de messages vocaux dans son habitacle. En réponse à ce message d'informations M1, le conducteur ou tout autre occupant du véhicule peut décider ou non de réaliser le nettoyage du capteur optique, notamment en fonction de son appréciation de la situation de conduite et de la gêne potentielle que ce nettoyage pourrait procurer dans cette situation, et il peut, dans un délai approprié, réaliser une instruction de commande (étape E4) reconnaissable par les moyens de reconnaissance 8 pour démarrer, via un pilotage du module de commande 6, une opération de nettoyage du capteur optique (étape E5).

Selon différents modes de réalisation, une fois l'opération de nettoyage de la lentille ou, plus généralement, du capteur optique 2 commandée depuis l'habitacle, cette opération peut être effectuée une ou plusieurs fois pendant un laps de temps prédéfini, ou avec une périodicité prédéterminée, plusieurs cycles de nettoyage pouvant ainsi être configurés. Ainsi, selon le mode de réalisation choisi, les moyens de reconnaissance 8 participent à l'élaboration d'une commande, depuis l'habitacle, d'un seul ou plusieurs déplacements, successifs ou répétés à des intervalles de temps prédéfinis, de l'ensemble de distribution de fluide 3 entre position de repos et position de travail. On limite ainsi les sollicitations du conducteur, permettant à ce dernier de concentrer son attention sur la conduite. Dans ce même ordre d'idée, à savoir limiter les sollicitations du conducteur, on pourra prévoir de ne mettre un terme à cette répétition de cycles de nettoyage qu'à l'arrêt complet du véhicule, de sorte que l'instruction de commande fournie par l'utilisateur est permanente jusqu'à l'arrêt du véhicule.

Par ailleurs, tel qu'illustré sur la figure 1, on peut prévoir que le module de commande 6 du dispositif selon l'invention est configuré pour recevoir des troisièmes données D3 en provenance de moyens de surveillance 11 d'un ou plusieurs paramètres de conduite du véhicule. A titre d'exemples non exhaustif, il peut s'agir de moyens de surveillance de la vitesse du véhicule (arrêt du véhicule, vitesse très lente, vitesse moyenne ou rapide, stabilisée ou non, etc ...), ou encore de moyens de surveillance du régime de conduite (véhicule au point mort, trajectoire droite ou non, etc ...). Ces moyens de surveillance 11 sont aptes à générer une ou plusieurs troisièmes données D3 représentatives d'une ou plusieurs situations de conduite prédéfinies, et le module de commande 6 considère cette troisième donnée pour déterminer de la possibilité d'une opération de nettoyage.

Il est avantageux que ces moyens de surveillance soient mis en œuvre lors de l'étape E2, lorsque, sur la base des premières données D1 reçues des moyens de détection 5, le module de commande 6 définit la prochaine nécessité d'une opération de nettoyage du capteur.

On génère dans ce cas une étape parallèle (étape E3a, représentée de façon facultative en traits pointillés sur la figure 2) au cours de laquelle on surveille lesdits paramètres pour en déduire une donnée D3 exploitable par le module de commande et qui conditionnera, selon ce mode de réalisation de l'invention, la prise en compte de la commande d'utilisateur telle qu'elle a été reconnue (étape E4) pour la mise en œuvre de l'opération de nettoyage (étape E5).

On a ici illustré un cas pratique où la prise en compte de cette troisième donnée D3 par le module de commande retarde la mise en œuvre de l'opération de nettoyage jusqu'à des situations de conduite préférentielles, alors que l'utilisateur a exprimé son souhait de réaliser ce nettoyage. On pourra prévoir en variante que cette troisième donnée D3 est immédiatement prise en compte par le module de commande et que le message d'information M1 n'est diffusé dans l'habitacle que sous certaines situations de conduite, et par exemple à l'arrêt du véhicule, afin que l'utilisateur puisse en toute sécurité répondre à ce message d'information.

Le dispositif de nettoyage de capteur optique selon l'invention peut être appliqué avec un ensemble de nettoyage d'une ou plusieurs surfaces vitrées 12 situées à l'avant et/ou à l'arrière du véhicule. Selon l'invention, on pourra prévoir que le module de commande 6 est configuré pour piloter le fonctionnement de l'ensemble de nettoyage 12 en plus du dispositif de nettoyage de capteur optique. Notamment, on pourra prévoir que la fonction de déclenchement automatique de l'ensemble de nettoyage de vitre soit couplée avec une fonction de déclenchement automatique du nettoyage d'un capteur. Et on pourra prévoir que le bouton, ou levier, 10 de commande d'instruction de nettoyage de capteur soit commun à celui associé au déclenchement de l'ensemble de nettoyage de vitre, et notamment au déclenchement des balais d'essuie-glace.

Dans une telle configuration, l'alimentation en fluide de nettoyage du dispositif de nettoyage du capteur 2 et l'alimentation en fluide de nettoyage de l'ensemble de nettoyage de la ou des surfaces vitrées 12 avant et/ou arrière du véhicule sont avantageusement réalisées à partir d'un réservoir commun de stockage 13 de fluide de nettoyage. Dans ce contexte, le dispositif selon l'invention comporte des moyens de surveillance 14 pour surveiller le niveau de fluide dans le réservoir commun de stockage 13. Avantageusement, ces moyens de surveillance 14 sont aptes à générer une quatrième donnée D4 représentative de ce niveau et à transmettre cette quatrième donnée au module de commande 6, qui est configuré pour commander sélectivement, en fonction d'une valeur prédéfinie de cette quatrième donnée D4, le fonctionnement du dispositif de nettoyage de capteur optique et l'ensemble de nettoyage de la ou des surfaces vitrées.

Plus précisément, et tel que cela est illustré sur la figure 3, l'invention prévoit que si le niveau de fluide de nettoyage dans le réservoir commun de stockage 13 passe au-dessous d'une première valeur seuil Vs1 prédéterminée, la quatrième donnée D4 transmise au module de commande 6 implique que seul le nettoyage du capteur optique 2 peut alors être réalisé avec le fluide de nettoyage encore disponible dans le réservoir commun de stockage. Concomitamment, l'invention prévoit qu'un message représentatif de cette quatrième donnée D4 soit généré et affiché dans l'habitacle du véhicule. En effet, l'opération de nettoyage du capteur 2 de l'ensemble de détection optique est alors considérée comme prioritaire en termes de sécurité par rapport au nettoyage des surfaces vitrées du véhicule. Avantageusement, l'invention prévoit également que, lorsque le niveau de liquide dans le réservoir commun de stockage 13 passe au-dessous d'une deuxième valeur seuil Vs2, inférieure à la première valeur seuil précitée, les moyens de surveillance 14 génèrent et transmettent au module de commande une quatrième donnée représentative de cette deuxième valeur, de sorte qu'une opération de nettoyage du capteur 2 ne puisse alors pas être autorisée, par manque de liquide de nettoyage. Concomitamment, l'invention prévoit qu'un message M2 correspondant soit affiché dans l'habitacle.

Dans les modes de réalisation qui viennent d'être décrits, dans lesquels le dispositif de nettoyage selon l'invention comporte un ensemble de nettoyage d'une ou plusieurs surfaces vitrées avant et/ou arrière du véhicule, l'invention comporte une étape E6 de commande du nettoyage de cette ou de ces surfaces vitrées, simultanément à la commande du nettoyage du capteur 2 de l'ensemble de détection optique. Avantageusement, ce procédé comporte également une étape E7 de surveillance du niveau du liquide de nettoyage dans le réservoir commun de stockage 13 et, en fonction de la valeur prise par la quatrième donnée D4 générée par les moyens de surveillance 14 de ce niveau, une commande conditionnelle de l'étape E6 de nettoyage de surface(s) vitrée(s) ou de la seule étape E5 de nettoyage du capteur optique.

L'invention atteint ainsi son but, en proposant un dispositif et un procédé de nettoyage d'un capteur 2 d'un système de détection optique dans lesquels l'opération de nettoyage est conditionnée à un accord préalable du conducteur ou de tout occupant du véhicule, sur la base d'informations relatives à l'état de salissure de ce capteur et/ou à la situation de conduite du véhicule transmises à un module de commande 6 configuré pour piloter à la fois des moyens d'affichage dans l'habitacle du véhicule et les moyens de nettoyage du capteur en fonction de la détection de l'accord de l'occupant du véhicule. L'invention permet ainsi de supprimer les situations de conduite dans lesquelles un tel nettoyage pourrait s'avérer gênant au regard d'une situation particulière de conduite, ou simplement inutile au regard de l'état de salissure de ce capteur.

L'invention ne saurait toutefois se limiter aux moyens et configurations décrits et illustrés. En particulier, elle s'applique à tout type de capteur d'un ensemble de détection optique apte à être installé sur un véhicule.

## Revendications

1. Dispositif de nettoyage d'un capteur (2) d'un système de détection optique pour véhicule automobile, qui comprend un ensemble de distribution de fluide (3) sur ledit capteur piloté par des instructions de fonctionnement émises par un module de commande (6), **caractérisé en ce que** ledit module de commande est configuré pour générer un message d'information (M1) relatif au besoin d'une opération de nettoyage du capteur et pour recevoir une instruction de commande d'un occupant du véhicule autorisant cette opération de nettoyage.

2. Dispositif selon la revendication 1, **caractérisé en ce qu'**il comporte des moyens de détection (5) de la présence de corps étrangers sur ledit capteur (2) configurés pour émettre vers le module de commande (6) une donnée (D1) relative au besoin d'une opération de nettoyage du capteur optique (2).

3. Dispositif selon l'une des revendications précédentes, **caractérisé en ce que** le module de commande est configuré pour communiquer avec des moyens de signalisation (7), susceptibles de générer ledit message d'information (M1) dans l'habitacle du véhicule.

4. Dispositif selon la revendication précédente, **caractérisé en ce qu'**il comporte des moyens de reconnaissance (8) de ladite instruction de commande d'un occupant du véhicule, configurés pour communiquer avec le module de commande et lui transmettre une donnée (D2) relative à l'autorisation de l'opération de nettoyage.

5. Dispositif selon la revendication précédente, **caractérisé en ce que** les moyens de reconnaissance (8) sont rendus actifs par le module de commande (6) simultanément à l'émission dudit message d'information (M1).

6. Dispositif selon l'une des revendications 4 ou 5, **caractérisé en ce que** les moyens de reconnaissance (8) comportent un bouton (10) apte à être actionné par un occupant du véhicule.

7. Dispositif selon l'une des revendications 4 à 6, **caractérisé en ce que** les moyens de reconnaissance (8) comportent des moyens de reconnaissance gestuelle et/ou vocale.

8. Dispositif selon l'une des revendications précédentes, **caractérisé en ce qu'**il comporte des moyens (11) de surveillance d'un ou plusieurs paramètres de conduite du véhicule configurés pour générer une donnée (D3) représentative de la situation de conduite de ce véhicule et pour communiquer cette donnée au module de commande (6).

9. Dispositif selon l'une des revendications précédentes, **caractérisé en ce que** le module de commande (6) est configuré pour piloter en outre le fonctionnement d'un ensemble de nettoyage d'au moins une surface vitrée (12) avant et/ou arrière du véhicule.

10. Dispositif selon la revendication précédente, **caractérisé en ce qu'**il comporte un réservoir de stockage de fluide (13) commun avec l'ensemble de nettoyage d'au moins une surface vitrée et **en ce qu'**il comporte des moyens de surveillance (14) d'un niveau de fluide dans ce réservoir, configurés pour communiquer avec le module de commande (6).

11. Dispositif selon la revendication précédente, **caractérisé en ce que** le module de commande (6) comporte des moyens pour commander sélectivement, en fonction d'une première valeur prédéfinie (Vs1) de niveau de fluide dans le réservoir de stockage (13), le dispositif de nettoyage du capteur optique et/ou l'ensemble de nettoyage d'au moins une surface vitrée (12).

12. Dispositif selon l'une des revendications précédentes, **caractérisé en ce que** le module de commande (6) est configuré pour générer, suite à une instruction de commande de l'occupant du véhicule, plusieurs cycles de nettoyage par l'ensemble de distribution de fluide (3), successivement ou à des intervalles de temps prédéfinis.

13. Procédé de nettoyage d'un capteur (2) d'un système de détection optique pour véhicule automobile, dans lequel un ensemble de distribution de fluide (3) est déplacé entre une position de repos et une position de travail dans laquelle le fluide peut être distribué sur une surface du capteur (2), au cours duquel on prévoit :
- une étape (E1) de détection, sur cette surface du capteur (2), d'éventuelles salissures,
- une étape (E2) de génération d'un signal représentatif de la présence d'éventuelles salissures à la surface du capteur optique,
- une étape (E3) d'affichage, dans l'habitacle du véhicule, d'un message représentatif de la présence d'éventuelles salissures à la surface du capteur optique,
- une étape (E4) de reconnaissance d'une commande, par un utilisateur situé dans l'habitacle du véhicule, sur la base du message affiché dans l'habitacle, autorisant une opération de nettoyage du capteur, et
- une étape (E5) de mise en marche de l'ensemble de distribution de fluide.

14. Procédé selon la revendication 13, **caractérisé en ce qu'**il comporte une étape de génération d'une donnée (D3) représentative de la situation de conduite du véhicule, ladite étape (E5) de mise en marche de l'ensemble de distribution de fluide étant conditionnée par la valeur de cette donnée (D3).

15. Procédé selon l'une des revendications 13 ou 14, **caractérisé en ce qu'**il comporte une étape de surveillance (E7) du niveau d'un réservoir commun de stockage (13) d'un fluide pour le nettoyage d'une surface vitrée (12) avant et/ou arrière du véhicule et pour le nettoyage du capteur (2), ainsi qu'une étape de génération d'une donnée (D4) représentative de ce niveau de fluide dans ce réservoir de stockage (13), ladite étape (E5) de mise en marche de l'ensemble de distribution de fluide étant conditionnée par la valeur de cette donnée (D4).

## Patentansprüche

1. Vorrichtung zur Reinigung eines Sensors (2) eines optischen Detektionssystems für ein Kraftfahrzeug, welche eine Anordnung zur Verteilung von Fluid (3) auf dem Sensor umfasst, die durch von einem Steuermodul (6) ausgesendete Betriebsanweisungen gesteuert wird, **dadurch gekennzeichnet, dass** das Steuermodul dafür ausgelegt ist, eine Informationsnachricht (M1) zu erzeugen, die sich auf einen Bedarf des Sensors an einem Reinigungsvorgang bezieht, und eine Steueranweisung eines Insassen des Fahrzeugs zu empfangen, die diesen Reinigungsvorgang genehmigt.

2. Vorrichtung nach Anspruch 1, **dadurch gekennzeichnet, dass** sie Mittel zur Detektion (5) des Vorhandenseins von Fremdkörpern auf dem Sensor (2) aufweist, die dafür ausgelegt sind, an das Steuermodul (6) eine Dateneinheit (D1) zu senden, die sich auf den Bedarf des optischen Sensors (2) an einem Reinigungsvorgang bezieht.

3. Vorrichtung nach einem der vorhergehenden Ansprüche, **dadurch gekennzeichnet, dass** das Steuermodul dafür ausgelegt ist, mit Signalisierungsmitteln (7) zu kommunizieren, die dazu eingerichtet sind, die Informationsnachricht (M1) im Innenraum des Fahrzeugs zu erzeugen.

4. Vorrichtung nach dem vorhergehenden Anspruch, **dadurch gekennzeichnet, dass** sie Mittel zur Erkennung (8) der Steueranweisung eines Insassen des Fahrzeugs aufweist, die dafür ausgelegt sind, mit dem Steuermodul zu kommunizieren und eine Dateneinheit (D2) zu ihm zu übertragen, die sich auf die Genehmigung des Reinigungsvorgangs bezieht.

5. Vorrichtung nach dem vorhergehenden Anspruch, **dadurch gekennzeichnet, dass** die Mittel zur Erkennung (8) durch das Steuermodul (6) gleichzeitig mit dem Senden der Informationsnachricht (M1) aktiviert werden.

6. Vorrichtung nach einem der Ansprüche 4 oder 5, **dadurch gekennzeichnet, dass** die Mittel zur Erkennung (8) eine Taste (10) umfassen, die von einem Insassen des Fahrzeugs betätigbar ist.

7. Vorrichtung nach einem der Ansprüche 4 bis 6, **dadurch gekennzeichnet, dass** die Mittel zur Erkennung (8) Mittel zur Gestenerkennung und/oder Spracherkennung umfassen.

8. Vorrichtung nach einem der vorhergehenden Ansprüche, **dadurch gekennzeichnet, dass** sie Mittel (11) zur Überwachung eines oder mehrerer Fahrparameter des Fahrzeugs aufweist, die dafür ausgelegt sind, eine Dateneinheit (D3) zu erzeugen, die für die Fahrsituation dieses Fahrzeugs repräsentativ ist, und diese Dateneinheit an das Steuermodul (6) zu übermitteln.

9. Vorrichtung nach einem der vorhergehenden Ansprüche, **dadurch gekennzeichnet, dass** das Steuermodul (6) dafür ausgelegt ist, außerdem den Betrieb einer Anordnung zur Reinigung wenigstens einer vorderen und/oder hinteren Glasfläche (12) des Fahrzeugs zu steuern.

10. Vorrichtung nach dem vorhergehenden Anspruch, **dadurch gekennzeichnet, dass** sie einen mit der Anordnung zur Reinigung wenigstens einer Glasfläche gemeinsamen Fluidvorratsbehälter (13) aufweist, und dadurch, dass die Mittel zur Überwachung (14) eines Fluidfüllstands in diesem Behälter aufweist, die dafür ausgelegt sind, mit dem Steuermodul (6) zu kommunizieren.

11. Vorrichtung nach dem vorhergehenden Anspruch, **dadurch gekennzeichnet, dass** das Steuermodul (6) Mittel zum selektiven Steuern, in Abhängigkeit von einem ersten vordefinierten Wert (Vs1) des Fluidfüllstands im Vorratsbehälter (13), der Vorrichtung zur Reinigung des optischen Sensors und/oder der Anordnung zur Reinigung wenigstens einer Glasfläche (12) aufweist.

12. Vorrichtung nach einem der vorhergehenden Ansprüche, **dadurch gekennzeichnet, dass** das Steuermodul (6) dafür ausgelegt ist, im Anschluss an eine Steueranweisung des Insassen des Fahrzeugs nacheinander oder in vordefinierten Zeitabständen mehrere Zyklen der Reinigung durch die Anordnung zur Verteilung von Fluid (3) zu erzeugen.

13. Verfahren zur Reinigung eines Sensors (2) eines optischen Detektionssystems für ein Kraftfahrzeug, wobei eine Anordnung zur Verteilung von Fluid (3) zwischen einer Ruheposition und einer Arbeitsposition, in welcher das Fluid auf einer Fläche des Sensors (2) verteilt werden kann, verlagert wird, und bei dem vorgesehen werden:
- ein Schritt (E1) der Detektion eventueller Verschmutzungen auf dieser Fläche des Sensors (2) ,
- ein Schritt (E2) der Erzeugung eines Signals, das für das Vorhandensein eventueller Verschmutzungen auf der Fläche des optischen Sensors repräsentativ ist,
- ein Schritt (E3) der Anzeige einer Nachricht, die für das Vorhandensein eventueller Verschmutzungen auf der Fläche des optischen Sensors repräsentativ ist, im Innenraum des Fahrzeugs,
- ein Schritt (E4) der Erkennung eines von einem im Innenraum des Fahrzeugs befindlichen Benutzer auf der Basis der im Innenraum angezeigten Nachricht gegebenen Befehls, der einen Vorgang der Reinigung des Sensors genehmigt, und
- ein Schritt (E5) der Ingangsetzung der Anordnung zur Verteilung von Fluid.

14. Verfahren nach Anspruch 13, **dadurch gekennzeichnet, dass** es einen Schritt der Erzeugung einer Dateneinheit (D3) umfasst, die für die Fahrsituation des Fahrzeugs repräsentativ ist, wobei der Schritt (E5) der Ingangsetzung der Anordnung zur Verteilung von Fluid in Abhängigkeit vom Wert dieser Dateneinheit (D3) ausgeführt wird.

15. Verfahren nach einem der Ansprüche 13 oder 14, **dadurch gekennzeichnet, dass** es einen Schritt der Überwachung (E7) des Füllstands eines gemeinsamen Vorratsbehälters (13) eines Fluids zur Reinigung wenigstens einer vorderen und/oder hinteren Glasfläche (12) des Fahrzeugs und zur Reinigung des Sensors (2) sowie einen Schritt der Erzeugung einer Dateneinheit (D4), die für diesen Fluidfüllstand in diesem Vorratsbehälter (13) repräsentativ ist, umfasst, wobei der Schritt (E5) der Ingangsetzung der Anordnung zur Verteilung von Fluid in Abhängigkeit vom Wert dieser Dateneinheit (D4) ausgeführt wird.

## Claims

1. Device for cleaning a sensor (2) of an optical detection system for a motor vehicle, which comprises an assembly (3) for distributing fluid onto said sensor that is driven by operating instructions sent by a control module (6), **characterized in that** said control module is configured to generate an information message (M1) relating to the need for a cleaning operation for the sensor and to receive a control instruction from an occupant of the vehicle who authorizes this cleaning operation.

2. Device according to Claim 1, **characterized in that** it includes means (5) for detecting the presence of foreign bodies on said sensor (2), which means are configured to send, to the control module (6), an item of data (D1) relating to the need for a cleaning operation for the optical sensor (2).

3. Device according to either of the preceding claims, **characterized in that** the control module is configured to communicate with signaling means (7) that are able to generate said information message (M1) in the passenger compartment of the vehicle.

4. Device according to the preceding claim, **characterized in that** it includes means (8) for recognizing said control instruction from an occupant of the vehicle, which means are configured to communicate with the control module and transmit to it an item of data (D2) relating to the authorization of the cleaning operation.

5. Device according to the preceding claim, **characterized in that** the recognition means (8) are activated by the control module (6) at the same time as the sending of said information message (M1).

6. Device according to either of Claims 4 and 5, **characterized in that** the recognition means (8) include a button (10) that is able to be actuated by an occupant of the vehicle.

7. Device according to one of Claims 4 to 6, **characterized in that** the recognition means (8) include gesture and/or voice recognition means.

8. Device according to one of the preceding claims, **characterized in that** it includes means (11) for monitoring one or more driving parameters of the vehicle, which means are configured to generate an item of data (D3) representative of the driving situation of this vehicle and to communicate this item of data to the control module (6).

9. Device according to one of the preceding claims, **characterized in that** the control module (6) is furthermore configured to drive the operation of an assembly for cleaning at least one front and/or rear glazed surface (12) of the vehicle.

10. Device according to the preceding claim, **characterized in that** it includes a fluid storage tank (13) shared with the assembly for cleaning at least one glazed surface, and **in that** it includes means (14) for monitoring a fluid level in this tank, which means are configured to communicate with the control module (6).

11. Device according to the preceding claim, **characterized in that** the control module (6) includes means for selectively controlling the device for cleaning the optical sensor and/or the assembly for cleaning at least one glazed surface (12), depending on a predefined first value (Vs1) of the fluid level in the storage tank (13) .

12. Device according to one of the preceding claims, **characterized in that** the control module (6) is configured to generate, following a control instruction from the occupant of the vehicle, a plurality of cleaning cycles by way of the fluid distribution assembly (3), sequentially or at predefined time intervals.

13. Method for cleaning a sensor (2) of an optical detection system for a motor vehicle, wherein a fluid distribution assembly (3) is moved between a rest position and a working position in which the fluid is able to be distributed onto a surface of the sensor (2), during which there is provided:
- a step (E1) of detecting possible dirt on this surface of the sensor (2),
- a step (E2) of generating a signal representative of the presence of possible dirt on the surface of the optical sensor,
- a step (E3) of displaying, in the passenger compartment of the vehicle, a message representative of the presence of possible dirt on the surface of the optical sensor,
- a step (E4) of recognition of an order, by a user situated in the passenger compartment of the vehicle, on the basis of the message displayed in the passenger compartment, authorizing a cleaning operation for the sensor, and
- a step (E5) of activating the fluid distribution assembly.

14. Method according to Claim 13, **characterized in that** it includes a step of generating an item of data (D3) representative of the driving situation of the vehicle, said step (E5) of activating the fluid distribution assembly being conditional upon the value of this item of data (D3).

15. Method according to either of Claims 13 and 14, **characterized in that** it includes a step (E7) of monitoring the level of a shared storage tank (13) for a fluid for cleaning a front and/or rear glazed surface (12) of the vehicle and for cleaning the sensor (2), and a step of generating an item of data (D4) representative of this fluid level in this storage tank (13), said step (E5) of activating the fluid distribution assembly being conditional upon the value of this item of data (D4).
